# EUROPEAN PATENT APPLICATION

(11) **EP 1 375 446 A1**
(43) Date of publication of application: **02.01.2004**
(21) Application number: 03253546.0
(22) Date of filing: 04.06.2003
(51) Int. Cl.: C04B 30/02, C04B 28/26

(54) **Thermal insulation material**

(30) Priority: 12.06.2002 GB 0213405
(71) Applicant: Ceramaspeed Limited, Kidderminster, Worcestershire DY11 7DY (GB)
(72) Inventor: Bradshaw, Mark, Kidderminster, Worcestershire DY10 4HS (GB)
(74) Representative: Jackson, Derek Charles

(57) **Abstract**

A thermal insulation material comprises an intimate mixture of:
60-90% by dry weight expanded vermiculite;
6.5-20% by dry weight inorganic binder;
1-14.5% by dry weight microporous material;
0.1-3.5% by dry weight reinforcing fibres; and
0.5-10% by dry weight infrared opacifier.

## Description

The present invention relates to thermal insulation material and more particularly relates to bound vermiculite insulation material containing a proportion of microporous material.

Moulded bound vermiculite insulation material is manufactured by mixing expanded, exfoliated, vermiculite with a liquid binder, for example an aqueous alkali metal silicate solution based on sodium or potassium, compressing the mixture to the required form, and heating the moulded mixture to cure the binder.

The advantages of bound vermiculite insulation are it is relatively strong and rigid, and it is relatively inexpensive due to the low cost of the raw materials.

The thermal insulation performance of bound vermiculite is, however, relatively poor by comparison with most other commercially used thermal insulation materials and compositions. For example, bound vermiculite, depending on product density and vermiculite grain size, has a thermal conductivity around 0.35 W/mK at a mean temperature of 200°C, whereas calcium silicate and ceramic fibre insulation materials have a typical thermal conductivity of around 0.05 W/mK at a mean temperature of 200°C. Microporous thermal insulation materials, for example a microporous thermal insulation material sold under the Registered Trade Mark MICROTHERM by Microtherm International Limited, has a thermal conductivity of around 0.025 W/mK at a mean temperature of 200°C.

The high thermal conductivity of bound vermiculite means it cannot readily be used as a thermal insulation material in certain applications, for example in radiant electric heaters of the type used in glass-ceramic hob cookers. In these forms of heaters, an annulus of insulation is present around the periphery of the retaining dish of the heater to reduce thermal losses. The reduction in thermal losses improves the efficiency of the heater by ensuring more heat is transmitted to a cooking area. The reduction in thermal loss also maintains the external temperature of the retaining dish at a level determined by a person skilled in the art to be sufficiently low so as not to lead to the risk of thermal damage to surrounding components.

The density of an annulus of bound vermiculite must be relatively high, for example greater than 800 kg/m³, to have the mechanical properties required for use in a glass-ceramic heater. If bound vermiculite insulation is used at densities greater than 800 kg/m³, the high thermal conductivity value of the vermiculite results in temperatures of the dish wall which are considered to be too high by a person skilled in the art.

GB-A-2 318 489 discloses an arrangement of an annulus of bound vermiculite in a retaining dish of a glass-ceramic hob heater, with a rim of microporous thermal insulation positioned between the majority of the vermiculite annulus and the wall of the retaining dish. In this arrangement, mechanical stability is provided by the vermiculite annulus, whilst heat loss is reduced by the rim of microporous thermal insulation material. In this arrangement, however, the microporous rim does not extend up the entire height of the dish and as such the heat losses in the upper region of the wall of the dish are significant.

In some designs of heater, and/or where specific customer requirements apply, it is still necessary to use an annulus of insulation without the presence of the insulating rim of microporous material.

EP-A-0 934 233 shows that the addition of microporous silica to vermiculite improves the thermal insulation properties of an inorganically bound moulded thermal insulation material compared with the thermal insulation properties of an inorganically bound moulded vermiculite insulation without any additions.

The compositions disclosed in EP-A-0 934 233, however, use additions of between 15 and 50 percent by weight of microporous silica. Although vermiculite is relatively inexpensive, microporous silica is relatively expensive. Compositions incorporating substantial amounts of microporous silica therefore result in relatively expensive materials. Thermal insulation for glass-ceramic heaters is a large volume market and as such the use of expensive materials is not commercially advantageous.

It is an object of the present invention to provide a thermal insulation material of bound vermiculite material comprising a proportion of microporous material and which has substantially lower thermal conductivity compared with vermiculite alone, but is comparatively inexpensive and possesses adequate mechanical properties.

According to the present invention there is provided a thermal insulation material comprising an intimate mixture of:
60-90% by dry weight expanded vermiculite;
6.5-20% by dry weight inorganic binder;
1-14.5% by dry weight microporous material;
0.1-3.5% by dry weight reinforcing fibres; and
0.5-10% by dry weight infrared opacifier.

The thermal insulation material may have substantially the following composition:
60-75% by dry weight expanded vermiculite;
7-17% by dry weight inorganic binder;
7-14.4% by dry weight microporous material;
0.2-3.5% by dry weight reinforcing fibres; and
3.5-9.5% by dry weight infrared opacifier.

The thermal insulation material may preferably have substantially the following composition:
63-69% by dry weight expanded vermiculite;
7-15% by dry weight inorganic binder;
12-14.5% by dry weight microporous material;
0.5-3.5% by dry weight reinforcing fibres; and
6-9.5% by dry weight infrared opacifier.

The inorganic binder may be an alkali metal silicate solution, preferably sodium and/or potassium silicate solution. The solids content of the alkali silicate solution may be from 25 to 40 per cent by weight, preferably from 30 to 38 per cent by weight.

The microporous material may be based on microporous metal oxide materials, preferably selected from microporous silica and microporous alumina.

The microporous alumina may comprise a relatively small proportion of the overall microporous material present.

The reinforcing fibres may be selected from fibres comprising calcium magnesium silicate, silica, magnesium silicate, and glass formulations selected from E, R, C and S glass.

The opacifier may be selected from opacifier materials comprising titanium oxide, iron titanium oxide, zirconium silicate and iron oxide.

For a better understanding of the present invention and to show more clearly how it may be carried into effect reference will now be made, by way of example, to the accompanying drawings in which:
Figure 1 is a graph illustrating the variation of the thermal conductivity (TC) of bound vermiculite thermal insulation material with microporous material content (C) in % dry weight; and
Figure 2 is a cross-sectional view of a radiant electric heater incorporating an annulus of thermal insulation material according to the invention.

The term 'microporous' is used herein to identify porous or cellular materials in which the ultimate size of the cells or voids is less than the mean free path of an air molecule at NTP, i.e. of the order of 100 nm or smaller. A material which is microporous in this sense will exhibit very low transfer of heat by air conduction (that is collisions between air molecules). Such microporous materials include aerogel, which is a gel in which the liquid phase has been replaced by a gaseous phase in such a way as to avoid the shrinkage which would occur if the gel were dried directly from a liquid. A substantially identical structure can be obtained by controlled precipitation from solution, the temperature and pH being controlled during precipitation to obtain an open lattice precipitate. Other equivalent open lattice structures include pyrogenic (fumed) and electrothermal types in which a substantial proportion of the particles have an ultimate particle size less than 100 nm. Any of these materials, based for example on silica, alumina or other metal oxides, may be used to prepare a composition which is microporous as defined above.

The invention will be explained with reference to the following Examples.

### EXAMPLE 1 (COMPARATIVE)

A body of thermal insulation material was made by mixing together in a paddle-type mixer a mixture of 73 per cent by wet weight of Micron grade exfoliated vermiculite available from the Mandoval Group, and 27 per cent by wet weight of a potassium silicate binder available from Ineos Chemicals under the name K66. The Micron grade exfoliated vermiculite has a water content of about 5 per cent by weight. The potassium silicate binder has the nominal composition 34.8 per cent by weight solids content and 65.2 per cent by weight water. The materials were mixed together in order to obtain a homogeneous mixture.

The mixture was compacted into a cylindrical body and then heated at about 200°C for from 15 to 30 minutes to substantially remove the water content present and cure the silicate binder. After curing, the compacted body had a diameter of 110 mm and a thickness of 25 mm, and a density of 1000 kg/m³. The composition of the body after curing was about 88 per cent by dry weight of Micron grade vermiculite and 12 per cent by dry weight of potassium silicate binder. The body was tested for thermal conductivity at a mean temperature of 200°C using cylindrical cell thermal conductivity methods known to a person skilled in the art.

The body had a thermal conductivity of 0.34 W/mK. Such a material is not suitable for use as a thermal insulation material in a glass-ceramic hob heater.

### EXAMPLE 2

Tests were carried out to determine the effect on thermal conductivity of microporous material content in a mixture of vermiculite and silicate binder. Bodies of thermal insulation material were made by mixing together and compacting, generally in the same manner as Example 1, a mixture of 73 per cent by wet weight of a mixture of Micron grade exfoliated vermiculite and microporous thermal insulation material available from Microtherm International Limited under the Trade Mark MICROTHERM, and 27 per cent by wet weight of potassium silicate binder.

The microporous thermal insulation material that is mixed with the vermiculite has a nominal content of 58 per cent by weight of microporous silica available from Cabot Corporation under Trade Mark CABOSIL M5, 1 per cent by weight of microporous alumina available from Degussa-Huls under the name ALUMINIUMOXID C, 30 per cent by weight of a particulate opacifier in the form of titanium dioxide and 11 per cent by weight of calcium magnesium silicate fibres. The water content of the microporous thermal insulation material is negligible. The materials were mixed together into a homogeneous mixture.

Microporous material, in the form of the microporous silica and alumina, was incorporated into the mix from which the cylindrical bodies were manufactured in the proportions by wet weight of 2.2 per cent, 6.5 per cent, and 11.0 per cent. The bodies were cured generally in the same manner as Example 1.

After the heating and curing process the proportions of microporous material, in the form of the microporous silica and alumina, incorporated in the bodies comprised by dry weight 2.7 per cent, 8.1 per cent, and 13.5 per cent.

The cylindrical bodies were tested for thermal conductivity at a mean temperature of 200°C using cylindrical cell thermal conductivity methods known to a person skilled in the art.

The following thermal conductivity figures were obtained:

**Table 1**

| Microporous material content (dry weight) | Thermal conductivity (Mean temperature 200°C) |
|---|---|
| 2.7 per cent | 0.31 W/mK |
| 8.1 per cent | 0.30 W/mK |
| 13.5 per cent | 0.27 W/mK |

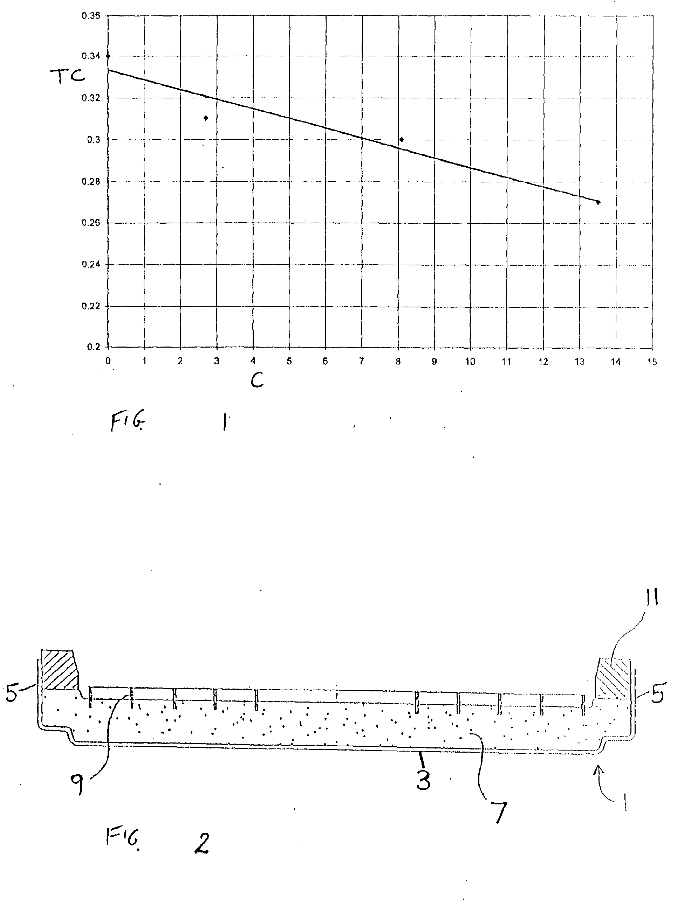

The results are summarised, along with the result obtained from Example 1, in Figure 1 which is a graph showing the variation in thermal conductivity of the cylindrical bodies at a mean temperature of 200°C (measured in W/mK) with microporous material content.

The results show that an addition of around 13.5 per cent by dry weight of microporous material to the vermiculite insulation material yields an improvement in thermal conductivity of approximately 20 per cent compared to bound vermiculite insulation material. This improvement is measurable in terms of product performance as will be shown hereinafter in Example 3.

### EXAMPLE 3

Vermiculite thermal insulation material, when bound and cured, is relatively poor at preventing heat loss to a surrounding retaining dish when used in a radiant electric heater arrangement. One consideration when manufacturing new forms of thermal insulation material based on vermiculite is therefore the temperature of the dish wall of a heater utilizing the vermiculite-based thermal insulation.

Tests have been carried out on the wall and base temperatures of a radiant electric heater arrangement using vermiculite thermal insulation materials containing microporous material additions.

The radiant electric heater as shown in Figure 2 has a metal dish-like support 1 formed with a base 3 and a surrounding wall 5. A base layer 7 of compacted microporous thermal and electrical insulation material is provided within the support.

A radiant electric heating element 9 is supported on the base layer 7. The heating element may be of any of the well-known forms, such as corrugated ribbon, coiled wire or ribbon, or infra-red lamp.

A discrete annular peripheral wall 11 of vermiculite based thermal insulating material is provided in the metal dish-like support 1.

### Test procedure

A 600W radiant electric heater, as shown in Figure 2, is fitted with insulating annuli of identical shape and comprising vermiculite thermal insulation materials containing microporous material additions. The external dish side and base temperatures are measured once steady state conditions have been established and the maximum temperatures in degrees Celsius are noted.

A test was carried out on annular bodies made from a number of different thermal insulation compositions generally in accordance with Examples 1 and 2 and based on microporous material contents of the compositions varying from 0 to 13.5 per cent by dry weight and the compositions compacted to an average density of 800 kg/m³.

The following temperatures were obtained:

**Table 2**

| Microporous material content (dry weight) | Dish base temperature | Dish wall temperature |
|---|---|---|
| 0 per cent | 324.0°C | 351.5°C |
| 8.1 per cent | 319.5°C | 345.0°C |
| 13.5 per cent | 313.5°C | 332.5°C |

A 13.5 per cent by dry weight addition of microporous material to bound vermiculite reduces the temperature of the dish wall by around 20°C compared with bound vermiculite alone.

### EXAMPLE 4

Vermiculite thermal insulation material, when bound and cured, is a relatively rigid material. One consideration when manufacturing new compositions of thermal insulation material based on vermiculite is therefore the strength of the material and the degree to which it can be handled. Tests have been carried out on the flexural strength of vermiculite thermal insulation materials containing microporous material additions.

### Test procedure

An annular body of the thermal insulation material is placed in a standard three-point flexural strength test rig ensuring that the annular body is centralised between the three loading bars and positioned such that the diameter of the annulus is at right angles to the direction of movement of the loading bars. The load is then increased until the body fails and the maximum force in Newtons (N) is noted.

A test was carried out on annular bodies made from a number of different thermal insulation compositions generally in accordance with Examples 1 and 2 and based on microporous material contents of the compositions varying from 0 to 13.5 per cent by dry weight and the compositions compacted to an average density of 800 kg/m³.

The following failure load figures were obtained:

**Table 3**

| Microporous material content (dry weight) | Failure load |
|---|---|
| 0 per cent | 20.9 N |
| 8.1 per cent | 23.0 N |
| 13.5 per cent | 22.0 N |

From Table 3 it can be seen that the addition of relatively small proportions of microporous material resulted in the load required to cause failure of a sample a thermal insulation material to increase. Relatively high proportions of microporous material cause the mechanical properties of vermiculite thermal insulation containing microporous material to degrade. The presence of relatively large proportions of microporous material increases the relative distance between vermiculite pieces and prevents efficient binding by the silicate binder. However, relatively small proportions of microporous material may give rise to an improvement in mechanical properties as a result of the reinforcing fibres contained in the microporous mixture.

The results shown in Table 3 indicate that the compositions containing 8.1 and 13.5 per cent by dry weight of microporous material are suitable for use as an annular body of thermal insulation material in a glass-ceramic hob heater.

The thermal insulation material according to the present invention can be used as hereinbefore described in the manufacture of radiant electric heaters as shown in Figure 2. When installed in a glass ceramic top cooker the insulating annulus 3 is pressed against the underside of a glass ceramic cooking surface (not shown). Clearly the configuration of the heater can be varied. For example the overall shape of the heater can be changed as can the number of heating elements.

A thermal insulation material according to the present invention has been described in which the inorganic binder is potassium silicate and the microporous material is based on silica and aluminium oxide. It should be appreciated that the thermal insulation could also be manufactured from other suitable materials, for example sodium silicate binder, and microporous materials based on other metal oxides. The fibre component of the microporous thermal insulation material mixed with the vermiculite can have compositions, for example, based on magnesium silicate, silica, or glass formulations, for example E, C, R and S glass fibres.

It should also be appreciated that the relative percentages of microporous material, opacifier and fibres comprising the microporous thermal insulation material that is mixed with the vermiculite may vary from those hereinbefore described.

The addition of around 13.5 per cent by dry weight of microporous material to a bound vermiculite mixture produces a material with substantially lower thermal conductivity compared with vermiculite alone. Further, due to the relatively small percentage of microporous material incorporated in the composition, the resulting thermal insulation material is comparatively inexpensive and maintains adequate mechanical properties.

## Claims

1. A thermal insulation material **characterised by** an intimate mixture of:
60-90% by dry weight expanded vermiculite;
6.5-20% by dry weight inorganic binder;
1-14.5% by dry weight microporous material;
0.1-3.5% by dry weight reinforcing fibres; and
0.5-10% by dry weight infrared opacifier.

2. A thermal insulation material as claimed in claim 1, **characterised in that** the thermal insulation material has substantially the following composition:
60-75% by dry weight expanded vermiculite;
7-17% by dry weight inorganic binder;
7-14.4% by dry weight microporous material;
0.2-3.5% by dry weight reinforcing fibres; and
3.5-9.5% by dry weight infrared opacifier.

3. A thermal insulation material as claimed in claim 2, **characterised in that** the thermal insulation material has substantially the following composition:
63-69% by dry weight expanded vermiculite;
7-15% by dry weight inorganic binder;
12-14.5% by dry weight microporous material;
0.5-3.5% by dry weight reinforcing fibres; and
6-9.5% by dry weight infrared opacifier.

4. A thermal insulation material as claimed in any preceding claim, **characterised in that** the inorganic binder is an alkali metal silicate solution, such as a sodium silicate solution and/or a potassium silicate solution.

5. A thermal insulation material as claimed in claim 4, **characterised in that** the alkali metal silicate solution has a solids content of from 25 to 40 per cent by weight, preferably from 30 to 38 per cent by weight.

6. A thermal insulation material as claimed in any preceding claim, **characterised in that** the microporous material is based on microporous metal oxide materials.

7. A thermal insulation material as claimed in claim 6, **characterised in that** the microporous metal oxide material includes microporous silica.

8. A thermal insulation material as claimed in claim 6 or 7, **characterised in that** the microporous metal oxide material includes microporous alumina.

9. A thermal insulation material as claimed in claim 8, **characterised in that** the microporous alumina comprises a relatively small proportion of the overall microporous material present.

10. A thermal insulation material as claimed in any preceding claim, **characterised in that** the reinforcing fibres are selected from calcium magnesium silicate, magnesium silicate, silica, glass formulations and mixtures thereof.

11. A thermal insulation material as claimed in claim 10, **characterised in that** the glass fibres are selected from E, R, C and S glass formulation fibres.

12. A thermal insulation material as claimed in any preceding claim, **characterised in that** the infrared opacifier is selected from titanium oxide, iron titanium oxide, zirconium silicate, iron oxide and mixtures thereof.
